(19) Europäisches Patentamt
European Patent Office
Office européen des brevets

(11) **EP 4 616 987 A1**

(12) **EUROPEAN PATENT APPLICATION**
published in accordance with Art. 153(4) EPC

(43) Date of publication:
**17.09.2025 Bulletin 2025/38**

(21) Application number: **24750144.8**

(22) Date of filing: **26.01.2024**

(51) International Patent Classification (IPC):
*B23K 11/24* (2006.01)     *B23K 11/11* (2006.01)
*C22C 38/00* (2006.01)     *C22C 38/38* (2006.01)
*C22C 38/60* (2006.01)

(52) Cooperative Patent Classification (CPC):
**B23K 11/11; B23K 11/24; C22C 38/00;
C22C 38/38; C22C 38/60**

(86) International application number:
**PCT/JP2024/002361**

(87) International publication number:
**WO 2024/162195 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023 JP 2023011470**

(71) Applicant: JFE Steel Corporation
**Tokyo 100-0011 (JP)**

(72) Inventors:
• **KIM, Jingeum**
  **Tokyo 100-0011 (JP)**
• **KAWABE, Nao**
  **Tokyo 100-0011 (JP)**
• **TAKASHIMA, Katsutoshi**
  **Tokyo 100-0011 (JP)**

(74) Representative: **Grünecker Patent- und
Rechtsanwälte
PartG mbB
Leopoldstraße 4
80802 München (DE)**

(54) **METHOD FOR MANUFACTURING WELDED JOINT, AND WELDED JOINT**

(57)     An object of the present invention is to provide a method for manufacturing a welded joint, and a welded joint, wherein the welded joint is produced by resistance spot welding capable of reducing the amount of hydrogen that penetrates into the welded joint in operation environments after welding and suppressing the delayed fracture of the welded joint during use.

In this method for manufacturing a welded joint, steel sheets include at least one high strength steel sheet having a tensile strength of 980 MPa or higher, and two or more of the steel sheets are placed in an overlapping manner and resistance-spot-welded to form a weld, wherein: the high strength steel sheet having a tensile strength of 980 MPa or higher has a specific composition; the heat-affected zone of the weld contains 50 grains/$\mu$m$^2$ or more of carbides containing at least one of Mo or Cr and having a grain size of 100 nm or less in terms of equivalent circular diameter; and a softened area of the weld has an average crystal grain size of 20 $\mu$m or less.

FIG. 2

## Description

Technical Field

The present invention relates to a method for manufacturing a welded joint by resistance spot welding of overlapping steel sheets, and to a welded joint.

Background Art

In the automotive field, high strength steel sheets have recently been used to reduce vehicle weight for better fuel efficiency and to improve vehicle safety in case of collisions. However, with increasing strength of steel sheets, concerns have arisen regarding the deterioration of the delayed fracture resistance of welds due to the residual stress from welding and the presence of hydrogen that penetrates into the welds during welding and in operation environments.

In detail, the welding method mainly used in the automobile production process is resistance spot welding. A weld formed by this method has a martensite phase as a result of the rapid cooling of the molten zone, forming a very hard microstructure. In addition, the thermal shrinkage in the cooling process generates tensile residual stress in the weld.

Rust-proofing oil or moisture on the surface of steel sheets may penetrate into welds during resistance spot welding, or moisture deposited on the surface of steel sheets from the outside in operation environments may cause hydrogen to penetrate into the inside. Since hydrogen from the oil or moisture that has penetrated affects the delayed fracture resistance, it is an important issue to ensure the delayed fracture resistance of resistance spot welds.

As a method for preventing such delayed fracture of welds, Patent Literature 1 discloses a technique for improving joint strength by softening the area between the nugget edge and the pressure-contact region of the steel sheets through two-step current application including primary current application (nugget formation) and subsequent post-heating current application.

Patent Literature 2 discloses a technique for improving joint strength by performing post-current application after primary current application (nugget formation) and controlling the welding electrode to alternately and continuously repeat upward and downward movements, thereby mitigating tensile residual stress.

Patent Literature 3 discloses a technique for preventing delayed fracture by performing post-current application after primary current application (nugget formation) to maintain a high-temperature environment in which hydrogen can easily diffuse and thus to discharge hydrogen that has penetrated during welding to the outside.

Citation List

Patent Literature

PTL 1: International Publication No. WO 2014/171495
PTL 2: Japanese Unexamined Patent Application Publication No. 2018-144098
PTL 3: Japanese Unexamined Patent Application Publication No. 2019-72764

Summary of Invention

Technical Problem

The techniques in Patent Literature 1 and Patent Literature 2 use heating through post-current application after nugget formation to strengthen the pressure-contact region and mitigate residual stress. These techniques, however, do not consider the effects of hydrogen, which is a main cause of delayed fracture, and may impose a risk of delayed fracture due to hydrogen accumulation.

The technique in Patent Literature 3 reduces the amount of hydrogen that penetrates into welds during welding. This technique, however, does not consider hydrogen that penetrates from the outside in operation environments after welding and may impose a risk of delayed fracture in operation environments after welded joint production.

Note that none of these techniques considers the effect of carbides containing Mo or Cr, which act as trap sites for hydrogen, a cause of delayed fracture. By investigating the relationship between delayed fracture resistance and carbides containing these elements, it may be possible to produce better resistance spot welds. Furthermore, the addition of Mo and Cr, elements that improve hardenability, can prevent coarsening of crystal grains and allows fine and uniform distribution of the carbides. This increases the area of carbide interfaces and crystal grain boundaries, which act as hydrogen trapping sites, thereby expectedly further improving delayed fracture resistance.

An object of the present invention is to provide a method for manufacturing a welded joint, and a welded joint, wherein the welded joint is produced by resistance spot welding capable of reducing the amount of hydrogen that penetrates into the welded joint in operation environments after welding and suppressing the delayed fracture of the welded joint during use.

Solution to Problem

To suppress the delayed fracture of a welded joint obtained by resistance spot welding of high strength steel sheets, the inventors of the present invention have made the following findings as a result of studying the behavior of hydrogen penetration in operation environments, which is a cause of delayed fracture.

First, hydrogen penetrates into a weld from an external environment. A resistance spot weld has, around the nugget, a heat-affected zone having different phases and microstructures depending on the distance from the nugget. Hydrogen that penetrates from the outside needs to pass through the heat-affected zone to penetrate into the nugget edge, which is a main fracture origin in the weld. Hydrogen that has passed through the heat-affected zone accumulates at the nugget edge, where residual stresses are concentrated to cause delayed fracture.

Therefore, reducing the amount of hydrogen that passes through the heat-affected zone into the nugget to reduce the amount of hydrogen that accumulates at the nugget edge is effective in suppressing delayed fracture.

The inventors of the present invention have studied a preferred welded joint manufacturing method that can reduce the amount of hydrogen that penetrates into the nugget edge from the outside. First, it has been found that the precipitation of high-density carbides in the heat-affected zone of a resistance spot weld allows the prior trapping of hydrogen that penetrates from the outside and thus improves the delayed fracture resistance of a welded joint. In addition, when resistance spot welding of steel sheets containing Mo and Cr involves precipitation of Mo carbides and Cr carbides in the heat-affected zone, the delayed fracture resistance is improved with only shorter post-current application, without reducing the welded joint strength. It is also found that the presence of the above carbides can refine the crystal grains of the nugget and the heat-affected zone and allows trapping of more hydrogen that penetrates from the outside to increase the strength of the joint. It is further found that this welded joint can be manufactured by performing post-current application after welding current application to temper the heat-affected zone.

A method for manufacturing a welded joint according to the present invention has been developed on the basis of the above findings, the gist of which is as follows.

[1] A method for manufacturing a welded joint by resistance-spot-welding two or more overlapping steel sheets to form a weld, at least one of the steel sheets being a high strength steel sheet having a tensile strength of 980 MPa or higher,

wherein the high strength steel sheet having a tensile strength of 980 MPa or higher has a chemical composition containing: by mass%,
C: 0.100% or more and 0.400% or less,
Si: 0.200% or more and 2.500% or less,
Mn: 1.000% or more and 5.000% or less,
P: 0.010% or less,
S: 0.005% or less,
Al: 0.100% or less,
N: 0.004% or less, and

further containing:

at least one of Mo: 0.030% to 0.500% or
Cr: 0.030% to 0.300%,
the balance being Fe and incidental impurities,
a heat-affected zone of the weld contains 50 grains/$\mu m^2$ or more of carbides containing at least one of Mo or Cr and having a grain size of 100 nm or less in terms of equivalent circular diameter, and a softened area of the weld has an average crystal grain size of 20 $\mu m$ or less.

[2] The method for manufacturing a welded joint according to [1], wherein the chemical composition of the high strength steel sheet having a tensile strength of 980 MPa or higher further contains: by mass%,

one or two or more selected from
Ti: 0.10% or less,
Nb: 0.10% or less,

V: 0.10% or less,
Ca: 0.0200% or less,
Sb: 0.200% or less,
B: 0.0100% or less,
Cu: 1.00% or less, and
Ni: 0.50% or less.

[3] The method for manufacturing a welded joint according to [1] or [2], wherein the carbides containing at least one of Mo or Cr in the heat-affected zone of the weld have a maximum grain size of 500 nm or less in terms of equivalent circular diameter.

[4] The method for manufacturing a welded joint according to any one of [1] to [3],

wherein current application in the resistance spot welding includes primary current application and post-current application,

a current value $I_2$ in the post-current application and a current value $I_1$ in the primary current application satisfy formula (1) below, and a current application time $t_2$ in the post-current application satisfies formula (2) below:

$$I_1 \times (1.0 - MC/m)/0.9 < I_2 < I_1 \times (1.3 - MC/m) \quad \cdots \quad (1)$$

$$1.8 \times (0.8 - MC/m)/0.7 < t_2 < 2.5 \times (1 - MC/m) \quad \cdots \quad (2)$$

[Math. 1]

$$MC = \sum_{n=1}^{m} \{ ([Mo]_n + [Cr]_n) \times (dn/d1) \}$$

wherein

$I_1$: the current value (kA) in a primary current application step,
$I_2$: the current value (kA) in a post-current application step,
$t_2$: a post-current application time (sec),
$[Mo]_n$: a Mo content (mass%) of an nth thinnest steel sheet among the overlapping steel sheets,
$[Cr]_n$: a Cr content (mass%) of the nth thinnest steel sheet among the overlapping steel sheets,
dn: a sheet thickness (mm) of the nth thinnest steel sheet among the overlapping steel sheets,
d1: a sheet thickness (mm) of a thinnest steel sheet among the overlapping steel sheets, and
m: a total number of the steel sheets, and
the overlapping steel sheets are designated from the 1st to the mth in ascending order of sheet thickness.

[5] A welded joint comprising a weld and two or more steel sheets, at least one of the steel sheets being a high strength steel sheet having a tensile strength of 980 MPa or higher,

wherein the high strength steel sheet having a tensile strength of 980 MPa or higher has a chemical composition containing: by mass%,
C: 0.100% or more and 0.400% or less,
Si: 0.200% or more and 2.500% or less,
Mn: 1.000% or more and 5.000% or less,
P: 0.010% or less,
S: 0.005% or less,
Al: 0.100% or less,
N: 0.004% or less, and

further containing:

at least one of Mo: 0.030% to 0.500% or
Cr: 0.030% to 0.300%,
the balance being Fe and incidental impurities,

a heat-affected zone of the weld contains 50 grains/$\mu m^2$ or more of carbides containing at least one of Mo or Cr and having a grain size of 100 nm or less in terms of equivalent circular diameter, and a softened area of the weld has an average crystal grain size of 20 $\mu m$ or less.

[6] The welded joint according to [5], wherein the chemical composition of the high strength steel sheet having a tensile strength of 980 MPa or higher further contains: by mass%,

one or two or more selected from
Ti: 0.10% or less,
Nb: 0.10% or less,
V: 0.10% or less,
Ca: 0.0200% or less,
Sb: 0.200% or less,
B: 0.0100% or less,
Cu: 1.00% or less, and
Ni: 0.50% or less.

[7] The welded joint according to [5] or [6], wherein the carbides containing at least one of Mo or Cr in the heat-affected zone of the weld have a maximum grain size of 500 nm or less in terms of equivalent circular diameter. Advantageous Effects of Invention

The method for manufacturing a welded joint according to the present invention can solve the problem of delayed fracture of high strength steel sheets welded by resistance spot welding due to hydrogen penetration in operation environments.

Brief Description of Drawings

[Fig. 1] Fig. 1 is a schematic cross-sectional view of an example of a resistance spot welding method of the present invention.
[Fig. 2] Fig. 2 is a graph illustrating an example of a current application pattern and an example of an electrode force pattern in the resistance spot welding method of the present invention.
[Fig. 3] Fig. 3(a) and Fig. 3(b) are views of a test piece for resistance spot welding in Examples of the present invention, where Fig. 3(a) is a plan view, and Fig. 3(b) is a side view.

Description of Embodiments

The present invention provides a method for manufacturing a welded joint in which sufficient amounts of Mo carbides and Cr carbides precipitate in the heat-affected zone (hereinafter also referred to simply as heat-affected zone) of resistance spot welding (hereinafter also referred to simply as welding).
In a resistance spot welding method of the present invention, two or more steel sheets including at least one high strength steel sheet having a chemical composition described below are placed in an overlapping manner, and current is applied to the overlapping steel sheets with the steel sheets held and pressed by a pair of welding electrodes, whereby the steel sheets are heated with resistance heat generated between the sheets to form a nugget and join the steel sheets together.

[Chemical Composition]

The high strength steel sheet has a tensile strength of 980 MPa or higher and has a chemical composition containing, by mass%, C: 0.100% or more and 0.400% or less, Si: 0.200% or more and 2.500% or less, Mn: 1.000% or more and 5.000% or less, P: 0.010% or less, S: 0.005% or less, Al: 0.100% or less, N: 0.004% or less and containing at least one of Mo: 0.030% to 0.500% or Cr: 0.030% to 0.300%. In the present invention, a steel sheet having a tensile strength of 980 MPa or higher is referred to as a high strength steel sheet.
The reasons for limiting the average composition of the high strength steel sheet in the present invention will be described below.

C: 0.100% or More and 0.400% or Less

Carbon C is used to control the microstructure of the high strength steel sheet so that the high strength steel sheet has a TS of 980 MPa or higher and to control the hardness of the nugget. If the C content is less than 0.100%, it is difficult to achieve a TS of 980 MPa or higher. Therefore, the C content is 0.100% or more. The C content is preferably 0.130% or more. The C content is more preferably 0.140% or more, still more preferably 0.145% or more. If the C content exceeds 0.400%, the nugget has high hardness, and it is difficult to suppress a fracture in the nugget. Therefore, the C content is 0.400% or less. The C content is preferably 0.380% or less. The C content is more preferably 0.375% or less. The C content is most preferably 0.370% or less.

Si: 0.200% or More and 2.500% or Less

Silicon Si is used to control the microstructure of the high strength steel sheet and control the size and amount of inclusions. If the Si content is less than 0.200%, it is difficult to achieve a TS of 980 MPa or higher. Therefore, the Si content is 0.200% or more. The Si content is preferably 0.210% or more. The Si content is more preferably 0.220% or more. The Si content is still more preferably 0.240% or more. If the Si content exceeds 2.500%, a desired amount of carbides is not generated in the heat-affected zone because Si has a carbide generation suppressing effect, and it is difficult to improve the delayed fracture resistance of the heat-affected zone. Therefore, the Si content is 2.500% or less. The Si content is preferably 2.480% or less. The Si content is more preferably 2.460% or less. The Si content is most preferably 2.440% or less.

Mn: 1.000% or More and 5.000% or Less

Manganese Mn is used to control the microstructures of the high strength steel sheet and the nugget and control the size and amount of inclusions. If the Mn content is less than 1.000%, it is difficult to achieve a TS of 980 MPa or higher. Therefore, the Mn content is 1.000% or more. The Mn content is preferably 1.200% or more. The Mn content is more preferably 1.220% or more, still more preferably 1.250% or more. If the Mn content exceeds 5.000%, large amounts of coarse inclusions are generated in the nugget, and the nugget has a high tendency for brittle fracture. Therefore, the Mn content is 5.000% or less. The Mn content is preferably 4.950% or less, more preferably 4.920% or less. The Mn content is still more preferably 4.900% or less.

P: 0.010% or Less

Phosphorus P is dissolved in the nugget and increases the tendency for brittle fracture of the nugget. If the P content exceeds 0.010%, a fracture may occur in the nugget even if the hardness or microstructure of the nugget are controlled. Therefore, the P content is 0.010% or less. The P content is preferably 0.008% or less, more preferably 0.006% or less. The P content is still more preferably 0.005% or less. The lower limit is not specified, but the P content is preferably 0.0001% or more for reasons such as the economic costs associated with the complete removal of P.

S: 0.005% or Less

Sulfur S is dissolved in the nugget or present as sulfides in the nugget and increases the tendency for brittle fracture of the nugget. If the S content exceeds 0.005%, a fracture may occur in the nugget even if the hardness or microstructure of the nugget are controlled.
The S content is thus 0.005% or less. The S content is preferably 0.004% or less. The S content is more preferably 0.003% or less. The S content is still more preferably 0.001% or less. The lower limit is not specified, but the S content is preferably 0.0001% or more for reasons such as economic costs.

Al: 0.100% or Less

Aluminum Al is an element that controls the size and amount of oxide inclusions formed by the reaction between the weld and the outside air. If the Al content exceeds 0.100%, large amounts of coarse inclusions are generated in the nugget, and the nugget has a high tendency for brittle fracture. Therefore, the Al content is 0.100% or less. The Al content is preferably 0.080% or less. The Al content is more preferably 0.070% or less. The Al content is still more preferably 0.060% or less. The Al content is most preferably 0.050% or less. The lower limit of the Al content is not specified, but the Al content is preferably 0.005% or more in view of restrictions on production technology. The Al content is more preferably 0.006% or more. The Al content is still more preferably 0.007% or more.

N: 0.004% or Less

Nitrogen N is present as nitrides in steel. If the N content exceeds 0.004%, the high strength steel sheet has a low deformation capacity, and it is thus difficult to suppress brittle fracture in the nugget during and after welding. The N content is thus 0.004% or less. The N content is preferably 0.003% or less. The N content is more preferably 0.002% or less. The N content is still more preferably 0.001% or less. The lower limit of the N content is not specified, but the N content is preferably 0.0005% or more in view of restrictions on production technology.

At Least One of Mo: 0.030% or More and 0.500% or Less or Cr: 0.030% or More and 0.300% or Less

Molybdenum Mo and Chromium Cr are used to control the size and amount of carbides in the high strength steel sheet and the heat-affected zone. At least one of Mo or Cr needs to be contained, and the contents of Mo and Cr are Mo: 0.030% or more and 0.500% or less and Cr: 0.030% or more and 0.300% or less. If the content of at least one of Mo or Cr exceeds their upper limit, excessive tempering leads to the formation of large amounts of coarse precipitates in the heat-affected zone, resulting in low joint strength. Therefore, the Mo content is 0.500% or less. The Mo content is preferably 0.475% or less. The Mo content is more preferably 0.450% or less. The Mo content is still more preferably 0.420% or less. The Cr content is 0.300% or less. The Cr content is preferably 0.290% or less. The Cr content is more preferably 0.280% or less. The Cr content is still more preferably 0.270% or less. If both Mo and Cr are less than 0.030%, it is difficult to achieve a desired hydrogen trapping effect of the heat-affected zone. Therefore, the Mo content is 0.030% or more. The Mo content is preferably 0.035% or more, more preferably 0.040% or more. The Mo content is still more preferably 0.050% or more. The Cr content is 0.030% or more. The Cr content is preferably 0.035% or more. The Cr content is more preferably 0.040% or more. The Cr content is still more preferably 0.050% or more.

The high strength steel sheet of the present invention contains the elements described above, with the balance being Fe and incidental impurities.

The above chemical composition is the basic chemical composition of the high strength steel sheet. In the present invention, the chemical composition of the high strength steel sheet can further contain one or two or more selected from Ti, Nb, V, Ca, Sb, B, Cu, and Ni as necessary.

Ti: 0.10% or Less, Nb: 0.10% or Less, V: 0.10% or Less

Titanium Ti, Niobium Nb, and Vanadium V form fine carbides, nitrides, or carbonitrides during hot rolling or annealing to increase the TS. If the content of at least one of Ti, Nb, or V each exceeds 0.10%, large amounts of coarse precipitates and inclusions are generated and, when the steel sheet contains diffusible hydrogen, act as crack origins in the bending test, resulting in low bendability. Therefore, when at least one of Ti, Nb, or V is contained, the content of each is 0.10% or less. The content of each is preferably 0.09% or less. The content of each is more preferably 0.08% or less. The content of each is most preferably 0.06% or less. The lower limit is not specified, but the content of each is preferably 0.001% or more in view of restrictions on production technology. The content of each is more preferably 0.002% or more.

Ca: 0.0200% or Less

Calcium Ca is present as inclusions in steel. If the Ca content exceeds 0.0200% and when the high strength steel sheet contains diffusible hydrogen, the inclusions described above act as crack origins in the bending test, resulting in low bendability. When Ca is contained, the Ca content is thus 0.0200% or less. The Ca content is preferably 0.0180% or less. The Ca content is more preferably 0.0160% or less. The Ca content is still more preferably 0.0150% or less.

The lower limit of the Ca content may be 0.0000%, but the Ca content is preferably 0.0001% or more in view of restrictions on production technology. The Ca content is more preferably 0.0002% or more. The Ca content is still more preferably 0.0003% or more.

Sb: 0.200% or Less

Antimony Sb is an element effective in suppressing oxidation of the steel sheet surface during annealing and controlling the surface softening thickness. Sb is also an element that can suppress nitriding of the surface layer of the high strength steel sheet during annealing to reduce the frequency of coincident site lattice boundaries in the surface layer of the high strength steel sheet. If the Sb content exceeds 0.200%, the surface softened area cannot be formed, resulting in low bendability and low LME resistance. When Sb is contained, the Sb content is thus 0.200% or less. The Sb content is preferably 0.190% or less. The Sb content is more preferably 0.170% or less. The Sb content is still more preferably 0.150% or less. The Sb content is most preferably 0.130% or less. The lower limit of the Sb content may be 0.000%, but the Sb content is preferably 0.001% or more to reduce the frequency of coincident site lattice boundaries and obtain better LME resistance. The Sb content is more preferably 0.002% or more, still more preferably 0.005% or more.

B: 0.0100% or Less

Boron B is an element that segregates at austenite grain boundaries to improve hardenability. The addition of B to steel can suppress ferrite formation and grain growth during annealing cooling. To obtain such effects, the B content is preferably 0.0001% or more when B is contained. The B content is more preferably 0.0002% or more. If the B content exceeds 0.0100%, cracking occurs inside the high strength steel sheet during hot rolling to reduce the ultimate deformation capacity of the high strength steel sheet. As a result, the total void number density increases after punching, resulting in reduced stretch flangeability. In addition, bendability also deteriorates. Therefore, the B content is 0.0100% or less when B is contained. When B is contained, the B content is preferably 0.0080% or less. The B content is more preferably 0.0070% or less. The B content is still more preferably 0.0050% or less.

Cu: 1.00% or Less

Copper Cu is an element that enhances hardenability. Cu is effective in controlling the area fraction of the hard phase in a more suitable range, controlling the TS in a more suitable range, and further improving dimensional accuracy during forming. To obtain such effects, the Cu content is preferably 0.01% or more when Cu is contained. The Cu content is more preferably 0.02% or more. If the Cu content exceeds 1.00%, the increased area fraction of the hard phase reduces dimensional accuracy and ductility during forming. In addition, more coarse precipitates and inclusions are generated, and when the steel sheet contains diffusible hydrogen, the coarse precipitates and the inclusions act as crack origins in the bending test, resulting in low bendability. Therefore, the Cu content is 1.00% or less when Cu is contained. When Cu is contained, the Cu content is preferably 0.95% or less. When Cu is contained, the Cu content is more preferably 0.90% or less.

Ni: 0.50% or Less

Nickel Ni is an element that enhances hardenability. Ni is effective in controlling the area fraction of the hard phase in a more suitable range, controlling the TS in a more suitable range, and further improving dimensional accuracy during forming. To obtain such effects, the Ni content is preferably 0.01% or more when Ni is contained. The Ni content is more preferably 0.02% or more. If the Ni content exceeds 0.50%, the increased area fraction of the hard phase reduces dimensional accuracy and ductility during forming. In addition, more coarse precipitates and inclusions are generated, and when the high strength steel sheet contains diffusible hydrogen, the coarse precipitates and the inclusions act as crack origins in the bending test, resulting in low bendability. Therefore, the Ni content is 0.50% or less when Ni is contained. When Ni is contained, the Ni content is preferably 0.45% or less. When Ni is contained, the Ni content is more preferably 0.43% or less. When Ni is contained, the Ni content is most preferably 0.40% or less.

[Tensile Strength]

The high strength steel sheet needs to have a tensile strength of 980 MPa or higher, which is said to be a strength at which delayed fracture becomes a concern. The tensile strength is more preferably 1180 MPa or higher. The upper limit is not specified, but the tensile strength is preferably 2000 MPa or less.
The sheet thickness of the high strength steel sheet is preferably, but not necessarily, 0.8 mm or more. The sheet thickness is preferably 5.0 mm or less.
In resistance spot welding, at least one of the steel sheets needs to be the high strength steel sheet described above, but the other steel sheets are not limited.
The heat-affected zone, which is affected by welding heat, is present around the nugget, and the heat-affected zone contains a softened area. The softened area is a region that is softer than the base material due to tempering. The softened area is a region formed between the base material and the nugget and has a hardness lower than the average hardness (HV) of the base material.

[Carbides in Heat-Affected Zone]

The contained Mo and Cr form Mo carbides and Cr carbides (carbides containing at least one of Mo or Cr and including Mo-Cr complex carbides) in the heat-affected zone around the nugget under the effect of the heat generated by resistance spot welding. The formed Mo carbides and Cr carbides in the heat-affected zone can trap hydrogen that penetrates from the outside and reduces the amount of hydrogen that accumulates at the nugget edge to suppress delayed fracture. At the same amount of Mo carbides and Cr carbides formed, carbides having a grain size of more than 100 nm in terms of equivalent circular diameter have a smaller total surface area than carbides having a grain size of 100 nm or less. Thus, excessive tempering is required to precipitate enough carbides to provide a surface area sufficient for trapping hydrogen that penetrates into the nugget, and excessive tempering reduces the joint strength. Therefore, the grain size of the carbides is 100 nm or less in terms of equivalent circular diameter. Since the size of the carbides effective for hydrogen trapping is 100 nm or less, the study has focused on the carbides with this size. The grain size corresponds to the equivalent circular diameter.

If the density of the formed Mo carbides having a grain size of 100 nm or less and the formed Cr carbides having a grain size of 100 nm or less is less than 50 grains/$\mu$m$^2$, the formed Mo carbides and Cr carbides cannot sufficiently reduce the amount of hydrogen that penetrates into the nugget, which is a cause of delayed fracture. Therefore, the total density of the Mo carbides having a grain size of 100 nm or less in terms of equivalent circular diameter and the Cr carbides having a grain size of 100 nm or less in terms of equivalent circular diameter is 50 grains/$\mu$m$^2$ or more. The total density of the Mo carbides and the Cr carbides is preferably 80 grains/$\mu$m$^2$ or more. The upper limit is not specified, but the total density of the Mo carbides and the Cr carbides is preferably 1000 grains/$\mu$m$^2$ or less, more preferably 900 grains/$\mu$m$^2$ or less.

The grain size of the Mo carbides and the Cr carbides is preferably 80 nm or less in terms of equivalent circular diameter. The lower limit is not specified, but the grain size of the Mo carbides and the Cr carbides is preferably 5 nm or more.

Reducing the maximum grain size of the carbides containing at least one of Mo or Cr in the heat-affected zone of the weld increases the surface area of the carbide interfaces, which are hydrogen trapping sites, and allows additional trapping of hydrogen at the carbide interfaces to reduce the amount of hydrogen that penetrates from the outside to reach the nugget. The maximum grain size of the carbides corresponds to the equivalent circular diameter. If the maximum grain size of the carbides containing at least one of Mo or Cr in the heat-affected zone of the weld exceeds 500 nm in terms of equivalent circular diameter, the surface area of the carbide interfaces cannot be large enough to reduce the amount of hydrogen at the same carbide density. In this case, more carbide precipitation is required to reduce the amount of hydrogen to prevent delayed fracture, and the joint strength cannot be ensured due to excessive tempering. Therefore, the maximum grain size of the carbides containing at least one of Mo or Cr in the heat-affected zone of the weld is preferably 500 nm or less in terms of equivalent circular diameter. More preferably, the maximum grain size of the carbides is 450 nm or less in terms of equivalent circular diameter. Still more preferably, the maximum grain size of the carbides is 400 nm or less in terms of equivalent circular diameter. The lower limit is not specified, but the maximum grain size of the carbides is preferably 5 nm or more in terms of equivalent circular diameter for reasons of strength assurance.

[Average Crystal Grain Size in Softened Area of Weld]

Refining the prior $\gamma$ grains in the softened area to reduce the average crystal grain size increases the area of the crystal grain boundaries and allows additional trapping of hydrogen at the crystal grain boundaries to reduce the amount of hydrogen that penetrates from the outside, in addition to the effect of the carbides in reducing the amount of hydrogen that penetrates from the outside. The softened area means a region that is formed between the base material and the nugget and has a hardness lower than the average hardness (HV) of the base material. If the average crystal grain size in the softened area exceeds 20 $\mu$m, the area of the crystal grain boundaries is too small to sufficiently reduce the amount of hydrogen. In this case, more carbide precipitation is required to reduce the amount of hydrogen for delayed fracture prevention, and the joint strength cannot be ensured. Therefore, the average crystal grain size in the softened area is 20 $\mu$m or less. Preferably, the average crystal grain size is 18 $\mu$m or less. More preferably, the average crystal grain size is 15 $\mu$m or less. Still more preferably, the average crystal grain size is 14 $\mu$m or less. The lower limit is not specified, but the average crystal grain size is preferably 1 $\mu$m or more for reasons of strength assurance.

[Coating]

In the present invention, the high strength steel sheet can have a coating layer on the surface of the high strength steel sheet serving as a base material, as necessary. The coating layer is preferably a zinc coating layer or an alloyed zinc coating layer. Especially for automotive applications, the high strength steel sheet serving as a base material may undergo a hot-dip galvanizing treatment to produce a hot-dip galvanized steel sheet (GI) having a zinc coating layer on the surface of the high strength steel sheet serving as a base material. After the hot-dip galvanizing treatment, the hot-dip galvanized steel sheet may further undergo an alloying treatment to produce a hot-dip galvannealed steel sheet (GA) having an alloyed zinc coating layer on the surface of the high strength steel sheet serving as a base material. When the coating layer is 0.1 mm or less, the volume of the coating layer melts in during nugget formation is so small that the coating layer has no effect on delayed fracture. Therefore, the coating layer is preferably 0.1 mm or less. The lower limit is not specified, but the coating layer is preferably 0.05 mm or more from the viewpoint of coatability.

[Welding Method]

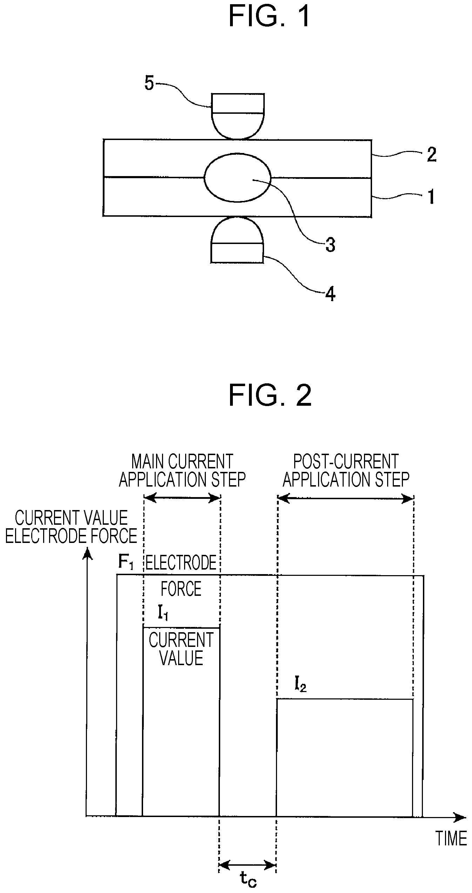

Fig. 1 is a schematic cross-sectional view of an example of a resistance spot welding method and illustrates resistance spot welding of two steel sheets. The resistance spot welding method of the present invention will be described below with reference to Fig. 1.

First, two or more steel sheets are placed in an overlapping manner. In Fig. 1, a steel sheet on the lower side (hereinafter referred to as a "lower steel sheet 1") and a steel sheet on the upper side (hereinafter referred to as an "upper steel sheet 2") are placed in an overlapping manner.

Next, current is applied to the overlapping steel sheets (the lower steel sheet 1 and the upper steel sheet 2) with the steel sheets held and pressed by a pair of welding electrodes, namely an electrode on the lower side (hereinafter referred to as a "lower electrode 4") and an electrode on the upper side (hereinafter referred to as an "upper electrode 5"). The system for pressing the steel sheets with the lower electrode 4 and the upper electrode 5 and controlling the electrode force is not limited, and a conventionally known device, such as an air cylinder or a servomotor, can be used. The system for supplying current during current application and controlling the current value is not limited either, and a conventionally known device can be used. The present invention can be applied to both direct current and alternating current. For alternating current, the "current" means "effective current." The type of the tip of the lower electrode 4 and the upper electrode 5 is not limited either. Examples of the tip include DR type (dome radius type), R type (radius type), and D type (dome type) described in JIS C 9304:1999. The tip diameter of each electrode is, for example, 4 mm or more. The tip diameter of each electrode is 16 mm or less. During resistance spot welding, the electrodes are preferably always cooled with water.

A welded joint is thus obtained by applying current to the overlapping steel sheets with the steel sheets held and pressed by a pair of welding electrodes to form a nugget 3 with resistance heating and join the overlapping steel sheets together. In the present invention, this application of electrode force and current is performed in a specific pattern.

Fig. 2 is a graph illustrating an example current application pattern and an example of electrode force pattern in the resistance spot welding method according to the present invention. In Fig. 2, the vertical axis represents the current value or the electrode force, and both the current value and the electrode force increase in the positive direction along the vertical axis on the graph.

A primary current application (hereinafter also referred to as "main current application") step involves forming a nugget section that becomes the nugget 3 (see Fig. 1) when it solidifies. The current application conditions and the pressing conditions for forming the nugget section are not limited, and the welding conditions used in the related art can be employed. For example, the current $I_1$ in the main current application step is 1.0 kA or more. The current $I_1$ in the main current application step is 15.0 kA or less. The electrode force $F_1$ is 2.0 kN or more. The electrode force $F_1$ is 7.0 kN or less. The time $t_1$ in the main current application step is not limited either and is, for example, 0.10 sec or more. The time $t_1$ in the main current application step is 1.00 sec or less. The "nugget" is a fused zone generated in the weld during resistance welding. The main current application step may involve a multi-step current application and multi-step pressing process in which the current value and the electrode force vary in the current application step. The nugget diameter is preferably, but not necessarily, $3\sqrt{t}$ or more when the sheet thickness is t mm. The nugget diameter is preferably $6\sqrt{t}$ or less.

The cooling step may be carried out after the main current application step.

The cooling step involves cooling the weld by bringing the electrodes into contact with the steel sheets for a cooling time $t_c$ (sec) after the molten zone formed by the main current application step solidifies into the nugget 3. This step can lower the temperature of the nugget 3 before the post-current application step to prevent phenomena such as re-melting and splash formation otherwise caused by excessive heating of the nugget 3 in the post-current application step. If the cooling time $t_c$ (sec) is too long, the temperature of the nugget 3 decreases excessively, and the weld cannot be sufficiently reheated, and desired delayed fracture resistance may not be obtained. Therefore, the cooling time $t_c$ (sec) is preferably 1.00 sec or less. The cooling time $t_c$ (sec) is more preferably 0.80 sec or less. The lower limit is not specified, but the cooling time $t_c$ (sec) is preferably 0.05 sec or more.

The post-current application step is carried out after the cooling step. The post-current application step involves changing the supplied current value in order to heat the heat-affected zone without increasing the nugget diameter.

First, the current value in the post-current application step will be described.

In the post-current application step, current is preferably applied at a current $I_2$ (kA) that satisfies formula (1) below, and the current application time is preferably a current application time $t_2$ (sec) that satisfies formula (2) below.

In the present invention, after the main current application step, current is applied at a current value $I_2$ (kA) in the post-current application step to reheat the inside of the nugget. In other words, the nugget 3 formed in the main current application step is maintained in a state that allows more carbides to precipitate during the post-current application when the weld is reheated in the post-current application step to temper the heat-affected zone. The overlapping steel sheets are designated from the 1st to the mth in ascending order of sheet thickness, and the Mo content (mass %) of the nth steel sheet is denoted as $[Mo]_n$ and the Cr content (mass %) as $[Cr]_n$.

The post-current application step involves reheating the heat-affected zone around the solidified nugget. If the

current value $I_2$ (kA) is $I_1 \times$ (1.0 - MC/m)/0.9 or less, the weld is not sufficiently reheated, and the amount of precipitated carbides is insufficient to trap hydrogen that penetrates from the outside. Therefore, the current value $I_2$ (kA) is preferably set above $I_1 \times$ (1.0 - MC/m)/0.9 relative to $I_1$ set in the main current application step. The current value $I_2$ (kA) is more preferably set above $I_1 \times$ (1.0 - MC/m)/0.88. The current value $I_2$ (kA) is still more preferably set above $I_1 \times$ (1.0 - MC/m)/0.85. The current value $I_2$ (kA) is most preferably set above $I_1 \times$ (1.0 - MC/m)/0.82. If the current value $I_2$ (kA) is too high, the heat-affected zone is overheated, and a sufficient amount of carbides is not obtained. If the current value is even higher, defects such as splash formation caused by melting easily occur. Therefore, the current value $I_2$ (kA) is set less than $I_1 \times$ (1.3 - MC/m) relative to $I_1$ set in the main current application step. The current value $I_2$ (kA) is preferably set less than $I_1 \times$ (1.3 - MC/m) $\times$ 0.98. The current value $I_2$ (kA) is more preferably set less than $I_1 \times$ (1.3 - MC/m) $\times$ 0.95.

When current is applied at the current value $I_2$ (kA) for the current application time $t_2$ that satisfies the range of formula (2), desired carbides are formed by tempering of the weld. If the current application time $t_2$ in the post-current application step is less than or equal to the left side of formula (2), the heat-affected zone is not sufficiently heated, and insufficient carbide precipitation leads to a lack of intended delayed fracture resistance. Therefore, the current application time in the post-current application step is preferably 1.8 $\times$ (0.8 - MC/m)/0.7 or more. The current application time in the post-current application step is more preferably 1.8 $\times$ (0.8 - MC/m)/0.65 or more. The current application time in the post-current application step is more preferably 1.8 $\times$ (0.8 - MC/m)/0.6 or more. If the current application time $t_2$ in the post-current application step is longer than or equal to the right side of formula (2), the strength of the welded joint strength cannot be ensured due to excessive tempering. Therefore, the current application time $t_2$ in the post-current application step is preferably 2.5 $\times$ (1 - MC/m) or less. The current application time in the post-current application step is more preferably 2.4 $\times$ (1 - MC/m) or less. The current application time in the post-current application step is more preferably 2.3 $\times$ (1 - MC/m) or less.

$$I_1 \times (1.0 - MC/m)/0.9 < I_2 < I_1 \times (1.3 - MC/m) \quad \cdots \quad (1)$$

$$1.8 \times (0.8 - MC/m)/0.7 < t_2 < 2.5 \times (1 - MC/m) \quad \cdots \quad (2)$$

[Math. 1]

$$MC = \sum_{n=1}^{m} \{ ([Mo]_n + [Cr]_n) \times (dn/d1) \}$$

wherein

$I_1$: the current value (kA) in the primary current application step,
$I_2$: the current value (kA) in the post-current application step,
$t_2$: the post-current application time (sec),
$[Mo]_n$: the Mo content (mass%) of the nth thinnest steel sheet among the overlapping steel sheets,
$[Cr]_n$: the Cr content (mass%) of the nth thinnest steel sheet among the overlapping steel sheets,
dn: the sheet thickness (mm) of the nth thinnest steel sheet among the overlapping steel sheets,
d1: the sheet thickness (mm) of the thinnest steel sheet among the overlapping steel sheets, and
m: the total number of the steel sheets, and
the overlapping steel sheets are designated from the 1st to the mth in ascending order of sheet thickness.

EXAMPLES

Referring to Fig. 1, the lower steel sheet 1 and the upper steel sheet 2 were placed in an overlapping manner and subjected to resistance spot welding.

Resistance spot welding was carried out in an atmosphere at room temperature with the electrodes always cooled with water. The lower electrode 4 and the upper electrode 5 were both DR-type electrodes made of chromium copper and having a tip with a diameter (tip diameter) of 6 mm and a curvature radius of 40 mm. The electrode force was controlled by driving the lower electrode 4 and the upper electrode 5 with a servo motor, and a single-phase alternating current with a frequency of 50 Hz was supplied during current application. The lower steel sheet 1 and the upper steel sheet 2 each had a tensile strength of 980 MPa or higher and had a long side of 100 mm, a short side of 30 mm, and a sheet thickness of 1.4 mm. The steel sheet strength, the presence of the coating layer, and the chemical composition for each steel sheet were as described in Table 1. The tensile strength is obtained by conducting the tensile test in accordance with the specifications of JIS Z 2241:2011 using a JIS No. 5 test piece for tensile test prepared from each steel sheet in the direction parallel to the rolling direction.

[Table 1]

| Steel sheet | Tensile strength (MPa) | Coating layer | Sheet thickness (mm) | Chemical composition (mass%)*1 | | | | | | | | | | | | | | | | |
|---|---|---|---|---|---|---|---|---|---|---|---|---|---|---|---|---|---|---|---|---|
| | | | | C | Si | Mn | P | S | Al | N | Mo | Cr | Ti | Nb | V | Ca | Sb | B | Cu | Ni |
| A | 1200 | absent | 1.4 | 0.135 | 1.200 | 1.800 | 0.005 | 0.005 | 0.040 | 0.002 | 0.015 | 0.015 | 0.040 | 0.020 | 0.010 | 0.0120 | 0.170 | 0.0025 | 0.025 | 0.055 |
| B | 1350 | absent | 1.6 | 0.150 | 1.000 | 1.600 | 0.003 | 0.004 | 0.010 | 0.003 | 0.400 | 0.017 | 0.020 | 0.030 | 0.020 | 0.0080 | 0.150 | 0.0012 | 0.045 | 0.180 |
| C | 1550 | absent | 1.2 | 0.185 | 1.100 | 2.200 | 0.006 | 0.003 | 0.030 | 0.001 | 0.016 | 0.260 | 0.040 | 0.010 | 0.030 | 0.0180 | 0.160 | 0.0045 | 0.105 | 0.085 |
| D | 1400 | absent | 1.4 | 0.165 | 0.900 | 2.000 | 0.004 | 0.005 | 0.020 | 0.004 | 0.420 | 0.270 | 0.010 | 0.040 | 0.020 | 0.0130 | 0.090 | 0.0028 | 0.035 | 0.035 |
| E | 1380 | present | 1.4 | 0.160 | 1.100 | 1.700 | 0.002 | 0.003 | 0.040 | 0.003 | 0.410 | 0.014 | 0.040 | 0.030 | 0.010 | 0.0120 | 0.070 | 0.0025 | 0.025 | 0.055 |
| F | 1700 | present | 1.6 | 0.195 | 1.700 | 2.400 | 0.005 | 0.004 | 0.010 | 0.003 | 0.019 | 0.250 | 0.020 | 0.010 | 0.030 | 0.0080 | 0.150 | 0.0012 | 0.045 | 0.180 |
| G | 1530 | present | 1.4 | 0.180 | 1.200 | 2.100 | 0.004 | 0.005 | 0.030 | 0.001 | 0.430 | 0.280 | 0.010 | 0.020 | 0.040 | 0.0180 | 0.160 | 0.0045 | 0.105 | 0.085 |
| H | 1440 | absent | 1.0 | 0.180 | 1.200 | 2.100 | 0.003 | 0.005 | 0.030 | 0.001 | 0.000 | 0.210 | 0.010 | 0.020 | 0.040 | 0.0000 | 0.160 | 0.0000 | 0.000 | 0.085 |
| I | 1370 | absent | 1.2 | 0.180 | 1.200 | 2.100 | 0.006 | 0.003 | 0.030 | 0.001 | 0.410 | 0.000 | 0.000 | 0.000 | 0.040 | 0.0180 | 0.000 | 0.0045 | 0.105 | 0.085 |
| J | 1550 | absent | 1.4 | 0.180 | 1.200 | 2.100 | 0.005 | 0.002 | 0.030 | 0.001 | 0.430 | 0.280 | 0.000 | 0.000 | 0.000 | 0.0000 | 0.000 | 0.0000 | 0.000 | 0.000 |
| K | 1450 | absent | 1.4 | 0.140 | 1.600 | 1.300 | 0.004 | 0.005 | 0.020 | 0.002 | 0.130 | 0.220 | 0.060 | 0.000 | 0.000 | 0.0000 | 0.000 | 0.0000 | 0.000 | 0.000 |
| L | 1390 | absent | 1.4 | 0.135 | 1.200 | 1.800 | 0.005 | 0.003 | 0.020 | 0.002 | 0.250 | 0.180 | 0.040 | 0.030 | 0.000 | 0.0000 | 0.000 | 0.0000 | 0.000 | 0.000 |

*1 The balance of the chemical composition other than the above components is Fe and incidental impurities.

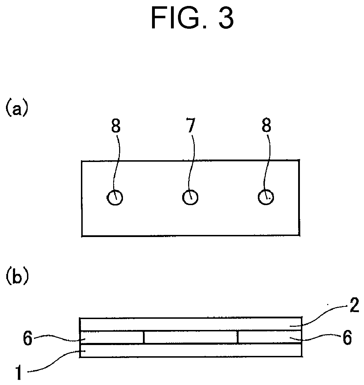

For resistance spot welding, as illustrated in Fig. 3, two steel sheets described above (long side: 100 mm, short side: 30 mm) were temporarily welded with a 30 mm square spacer 6 having a thickness of 1.5 mm interposed between the two steel sheets, and an assembly of two overlapping steel sheets was welded at the center under the conditions described in Table 2. Fig. 3 includes a plan view (Fig. 3(a)) and a side view (Fig. 3(b)) of a test piece for resistance spot welding. In Fig. 3, reference sign 7 represents a weld point, and reference sign 8 represents a tack weld point. For all samples, the primary current application step was carried out at a current value and current application time that produced a nugget diameter (mm) of $4\sqrt{t}$ relative to the sheet thickness t (mm). Note that "$\sqrt{t}$" means the square root of t.

[Table 2]

| Sample No. | Sheet assembly | MC | Primary current application electrode force (kN) | Primary current application time $t_1$ (sec) | Primary current application current $I_1$ (kA) | Cooling time $t_c$ (sec) | Post-current application electrode force (kN) | Post-current application current $I_2$ (kA) | Post-current application time $t_2$ (sec) | Holding time (sec) | Left side of formula (1) | Right side of formula (1) | Left side of formula (2) | Right side of formula (2) |
|---|---|---|---|---|---|---|---|---|---|---|---|---|---|---|
| 1 | A-A | 0.060 | 3.5 | 0.28 | 5.8 | 0.75 | 3.5 | 2.7 | 0.50 | 0.02 | 6.3 | 7.4 | 1.98 | 2.43 |
| 2 | B-B | 0.834 | 3.5 | 0.28 | 5.8 | 0.75 | 3.5 | 2.7 | 0.50 | 0.02 | 3.8 | 5.1 | 0.98 | 1.46 |
| 3 | C-C | 0.552 | 3.5 | 0.28 | 5.8 | 0.75 | 3.5 | 2.7 | 0.50 | 0.02 | 4.7 | 5.9 | 1.35 | 1.81 |
| 4 | D-D | 1.380 | 3.5 | 0.28 | 5.8 | 0.75 | 3.5 | 2.7 | 0.50 | 0.02 | 2.0 | 3.5 | 0.28 | 0.78 |
| 5 | B-E | 0.901 | 3.5 | 0.28 | 5.8 | 0.75 | 3.5 | 2.7 | 0.50 | 0.02 | 3.5 | 4.9 | 0.90 | 1.37 |
| 6 | C-F | 0.635 | 3.5 | 0.28 | 5.8 | 0.75 | 3.5 | 2.7 | 0.50 | 0.02 | 4.4 | 5.7 | 1.24 | 1.71 |
| 7 | D-G | 1.400 | 3.5 | 0.28 | 5.8 | 0.75 | 3.5 | 2.7 | 0.50 | 0.02 | 1.9 | 3.5 | 0.26 | 0.75 |
| 8 | B-B | 0.834 | 3.5 | 0.28 | 5.8 | 0.75 | 3.5 | 6.0 | 0.50 | 0.02 | 3.8 | 5.1 | 0.98 | 1.46 |
| 9 | D-D | 1.380 | 3.5 | 0.28 | 5.8 | 0.75 | 3.5 | 1.5 | 0.50 | 0.02 | 2.0 | 3.5 | 0.28 | 0.78 |
| 10 | B-B | 0.834 | 3.5 | 0.28 | 5.8 | 0.75 | 3.5 | 4.2 | 1.20 | 0.02 | 3.8 | 5.1 | 0.98 | 1.46 |
| 11 | D-D | 1.380 | 3.5 | 0.28 | 5.8 | 0.75 | 3.5 | 2.5 | 0.50 | 0.02 | 2.0 | 3.5 | 0.28 | 0.78 |
| 12 | A-B | 0.507 | 3.5 | 0.28 | 5.8 | 0.75 | 3.5 | 5.2 | 1.70 | 0.02 | 4.8 | 6.1 | 1.41 | 1.87 |
| 13 | C-D | 1.081 | 3.5 | 0.28 | 5.8 | 0.75 | 3.5 | 3.5 | 1.00 | 0.02 | 3.0 | 4.4 | 0.67 | 1.15 |
| 14 | D-D | 1.380 | 3.5 | 0.28 | 5.8 | 0.05 | 3.5 | 3.1 | 0.50 | 0.02 | 2.0 | 3.5 | 0.28 | 0.78 |
| 15 | H-D | 1.176 | 3.5 | 0.28 | 5.8 | 0.75 | 3.5 | 4.0 | 0.70 | 0.02 | 2.7 | 4.1 | 0.55 | 1.03 |
| 16 | I-D | 1.215 | 3.5 | 0.28 | 5.8 | 0.75 | 3.5 | 3.8 | 0.70 | 0.02 | 2.5 | 4.0 | 0.50 | 0.98 |
| 17 | J-J | 1.420 | 3.5 | 0.28 | 5.8 | 0.75 | 3.5 | 2.7 | 0.50 | 0.02 | 1.9 | 3.4 | 0.23 | 0.73 |
| 18 | A-C-D | 1.116 | 3.5 | 0.28 | 5.8 | 0.75 | 3.5 | 4.5 | 1.30 | 0.02 | 4.0 | 5.4 | 1.10 | 1.57 |
| 19 | D-K | 1.040 | 3.5 | 0.28 | 5.8 | 0.75 | 3.5 | 3.9 | 1.10 | 0.02 | 3.1 | 4.5 | 0.72 | 1.20 |
| 20 | D-L | 1.120 | 3.5 | 0.28 | 5.8 | 0.75 | 3.5 | 4.0 | 0.85 | 0.02 | 2.8 | 4.3 | 0.62 | 1.10 |
| 21 | A-B | 0.507 | 3.5 | 0.28 | 5.8 | 0.75 | 3.5 | 5.0 | 1.50 | 0.02 | 4.8 | 6.1 | 1.41 | 1.87 |

The sheet assembly includes, in order from the left, the upper steel sheet 2 and the lower steel sheet 1. A set of three steel sheets includes, in order from the left, the upper steel sheet 2, a middle steel sheet, and the lower steel sheet 1.

The obtained welded joint was left to stand in the air at room temperature (20°C), and the cross-section was observed using an optical microscope and a SEM (Scanning Electron Microscope), and the delayed fracture resistance was evaluated using the immersion test. The nugget diameter was measured by cutting the weld at the center, etching the cross-section in the thickness direction with picric acid, and observing the cross-section of the target surface with an optical microscope at a magnification of 40×.

Next, the target surface was mirror-polished until the target surface was no longer affected by the etching, followed by Nital etching. The Mo carbides and the Cr carbides contained in the heat-affected zone of the target surface were confirmed using the SEM, and the Mo carbides and the Cr carbides were identified using an EPMA (Electron Probe Micro Analyzer). The EPMA measurement conditions were as follows: acceleration voltage: 15 kV, beam current: $2 \times 10^{-7}$ A, observation magnification: 10,000×, beam diameter: 1.4 $\mu$m, time: 30 ms, and number of fields of view: 5. The concentration was the average of five fields of view.

After that, the grain size of the Mo carbides and the Cr carbides was measured in the photographs taken in SEM observation, and the density of the Mo carbides and the Cr carbides having equivalent circular diameters of 100 nm or less was measured. The SEM observation conditions were as follows: acceleration voltage 5 kV, and magnification 5,000x. The number of observation fields was 5, and the average was taken from five fields of view.

The carbide grain size in the heat-affected zone was measured by SEM observation at an acceleration voltage of 5 kv and a magnification of 10,000×, and the diameter of the carbides was converted to an equivalent circular diameter. The number of observation fields of view was 5, and the maximum diameter among them was defined as the maximum grain size of the carbides.

Using the samples measured above, the average crystal grain size was determined by magnifying randomly selected five softened areas 1000 times, measuring the grain size in accordance with JIS G 0551, and averaging the grain sizes.

For the evaluation of the delayed fracture resistance using the immersion test, samples that had been left to stand in the air for 24 hours or more after welding were immersed in a hydrochloric acid solution with a pH of 2.5 for 96 hours. The samples were rated as follows: A for samples in which the nugget did not delaminate (the phenomenon in which the nugget separates into two at the bonding interface); B for samples in which a crack was observed in the nugget but the nugget did not delaminate; and C for samples in which the nugget delaminated. In this case, the samples rated as "A" and "B" were evaluated to have good delayed fracture resistance.

Table 3 shows the results of the nugget diameter, the carbide density in the heat-affected zone, the maximum grain size of the carbides, the average crystal grain size in the softened area, and the delayed fracture evaluation obtained from the cross-sectional observations.

[Table 3]

| Sample No. | Nugget diameter (mm) | Average crystal grain size in softened area ($\mu$m) | Maximum grain size of carbides in heat-affected zone (nm) | Total density of Mo carbides and Cr carbides in heat-affected zone (grains/$\mu$m$^2$) | Evaluation of delayed fracture resistance | Note |
|---|---|---|---|---|---|---|
| 1 | 4.70 | 45 | 810 | 30 | C | Comparative Example 1 |
| 2 | 4.72 | 25 | 530 | 50 | C | Comparative Example 2 |
| 3 | 4.68 | 30 | 720 | 55 | C | Comparative Example 3 |
| 4 | 4.71 | 15 | 130 | 95 | A | Invention Example 1 |
| 5 | 4.73 | 32 | 560 | 60 | C | Comparative Example 4 |
| 6 | 4.70 | 38 | 620 | 55 | C | Comparative Example 5 |
| 7 | 4.75 | 16 | 160 | 91 | A | Invention Example 2 |
| 8 | 4.66 | 33 | 570 | 35 | C | Comparative Example 6 |
| 9 | 4.68 | 17 | 510 | 45 | C | Comparative Example 7 |
| 10 | 4.73 | 19 | 180 | 95 | A | Invention Example 3 |
| 11 | 4.71 | 14 | 140 | 105 | A | Invention Example 4 |
| 12 | 4.74 | 18 | 160 | 115 | A | Invention Example 5 |

(continued)

| Sample No. | Nugget diameter (mm) | Average crystal grain size in softened area (μm) | Maximum grain size of carbides in heat-affected zone (nm) | Total density of Mo carbides and Cr carbides in heat-affected zone (grains/μm²) | Evaluation of delayed fracture resistance | Note |
|---|---|---|---|---|---|---|
| 13 | 4.68 | 13 | 130 | 120 | A | Invention Example 6 |
| 14 | 4.72 | 12 | 120 | 85 | A | Invention Example 7 |
| 15 | 4.76 | 18 | 490 | 120 | A | Invention Example 8 |
| 16 | 4.80 | 16 | 450 | 85 | A | Invention Example 9 |
| 17 | 4.84 | 11 | 140 | 120 | A | Invention Example 10 |
| 18 | 4.85 | 18 | 180 | 72 | A | Invention Example 11 |
| 19 | 4.88 | 16 | 160 | 87 | A | Invention Example 12 |
| 20 | 4.93 | 18 | 110 | 96 | A | Invention Example 13 |
| 21 | 4.79 | 16 | 510 | 100 | B | Invention Example 14 |

Table 3 indicates that in Invention Examples, the amount of hydrogen penetration in operation environments was reduced to produce good welded joints having high delayed fracture resistance. In Comparative Examples, good welded joints were not obtained.

Reference Signs List

1:     Lower steel sheet
2:     Upper steel sheet
3:     Nugget
4:     Lower electrode
5:     Upper electrode
6:     Spacer
7:     Weld point
8:     Tack weld point

**Claims**

1.  A method for manufacturing a welded joint by resistance-spot-welding two or more overlapping steel sheets to form a weld, at least one of the steel sheets being a high strength steel sheet having a tensile strength of 980 MPa or higher,

    wherein the high strength steel sheet having a tensile strength of 980 MPa or higher has a chemical composition comprising: by mass%,
    C: 0.100% or more and 0.400% or less,
    Si: 0.200% or more and 2.500% or less,
    Mn: 1.000% or more and 5.000% or less,
    P: 0.010% or less,
    S: 0.005% or less,
    Al: 0.100% or less,
    N: 0.004% or less, and

    further comprising:

        at least one of Mo: 0.030% to 0.500% or

Cr: 0.030% to 0.300%,
the balance being Fe and incidental impurities,
a heat-affected zone of the weld contains 50 grains/$\mu$m$^2$ or more of carbides containing at least one of Mo or Cr and having a grain size of 100 nm or less in terms of equivalent circular diameter, and a softened area of the weld has an average crystal grain size of 20 $\mu$m or less.

2. The method for manufacturing a welded joint according to Claim 1, wherein the chemical composition of the high strength steel sheet having a tensile strength of 980 MPa or higher further comprises: by mass%,

one or two or more selected from
Ti: 0.10% or less,
Nb: 0.10% or less,
V: 0.10% or less,
Ca: 0.0200% or less,
Sb: 0.200% or less,
B: 0.0100% or less,
Cu: 1.00% or less, and
Ni: 0.50% or less.

3. The method for manufacturing a welded joint according to Claim 1 or 2, wherein the carbides containing at least one of Mo or Cr in the heat-affected zone of the weld have a maximum grain size of 500 nm or less in terms of equivalent circular diameter.

4. The method for manufacturing a welded joint according to any one of Claims 1 to 3,

wherein current application in the resistance spot welding includes primary current application and post-current application, and
a current value $I_2$ in the post-current application and a current value $I_1$ in the primary current application satisfy formula (1) below, and a current application time $t_2$ in the post-current application satisfies formula (2) below:

$$I_1 \times (1.0 - MC/m)/0.9 < I_2 < I_1 \times (1.3 - MC/m) \quad \cdots \quad (1)$$

$$1.8 \times (0.8 - MC/m)/0.7 < t_2 < 2.5 \times (1 - MC/m) \quad \cdots \quad (2)$$

[Math. 1]

$$MC = \sum_{n=1}^{m} \{ ([Mo]_n + [Cr]_n) \times (dn/d1) \}$$

wherein

$I_1$: the current value (kA) in a primary current application step,
$I_2$: the current value (kA) in a post-current application step,
$t_2$: a post-current application time (sec),
$[Mo]_n$: a Mo content (mass%) of an nth thinnest steel sheet among the overlapping steel sheets,
$[Cr]_n$: a Cr content (mass%) of the nth thinnest steel sheet among the overlapping steel sheets,
dn: a sheet thickness (mm) of the nth thinnest steel sheet among the overlapping steel sheets,
d1: a sheet thickness (mm) of a thinnest steel sheet among the overlapping steel sheets, and
m: a total number of the steel sheets, and
the overlapping steel sheets are designated from the 1st to the mth in ascending order of sheet thickness.

5. A welded joint comprising a weld and two or more steel sheets, at least one of the steel sheets being a high strength steel sheet having a tensile strength of 980 MPa or higher,

wherein the high strength steel sheet having a tensile strength of 980 MPa or higher has a chemical composition comprising: by mass%,

18

C: 0.100% or more and 0.400% or less,
Si: 0.200% or more and 2.500% or less,
Mn: 1.000% or more and 5.000% or less,
P: 0.010% or less,
S: 0.005% or less,
Al: 0.100% or less,
N: 0.004% or less, and

further comprising:

at least one of Mo: 0.030% to 0.500% or
Cr: 0.030% to 0.300%,
the balance being Fe and incidental impurities,
a heat-affected zone of the weld contains 50 grains/$\mu$m$^2$ or more of carbides containing at least one of Mo or Cr
and having a grain size of 100 nm or less in terms of equivalent circular diameter, and a softened area of the weld
has an average crystal grain size of 20 $\mu$m or less.

6. The welded joint according to Claim 5, wherein the chemical composition of the high strength steel sheet having a tensile strength of 980 MPa or higher further comprises: by mass%,

one or two or more selected from
Ti: 0.10% or less,
Nb: 0.10% or less,
V: 0.10% or less,
Ca: 0.0200% or less,
Sb: 0.200% or less,
B: 0.0100% or less,
Cu: 1.00% or less, and
Ni: 0.50% or less.

7. The welded joint according to Claim 5 or 6, wherein the carbides containing at least one of Mo or Cr in the heat-affected zone of the weld have a maximum grain size of 500 nm or less in terms of equivalent circular diameter.

# FIG. 1

# FIG. 2

# FIG. 3

(a)

(b)

## INTERNATIONAL SEARCH REPORT

| International application No. |
| --- |
| **PCT/JP2024/002361** |

**A. CLASSIFICATION OF SUBJECT MATTER**

**B23K 11/24**(2006.01)i; **B23K 11/11**(2006.01)i; **C22C 38/00**(2006.01)i; **C22C 38/38**(2006.01)i; **C22C 38/60**(2006.01)i
FI:   B23K11/24 315; B23K11/11 540; C22C38/00 301U; C22C38/38; C22C38/60

According to International Patent Classification (IPC) or to both national classification and IPC

**B. FIELDS SEARCHED**

Minimum documentation searched (classification system followed by classification symbols)

B23K11/24; B23K11/11; C22C38/00; C22C38/38; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2011/025015 A1 (NIPPON STEEL CORP.) 03 March 2011 (2011-03-03)<br>entire text, all drawings | 1-7 |
| A | WO 2014/196499 A1 (NIPPON STEEL & SUMITOMO METAL CORPORATION) 11 December 2014 (2014-12-11)<br>entire text, all drawings | 1-7 |
| A | WO 2022/210749 A1 (NIPPON STEEL CORPORATION) 06 October 2022 (2022-10-06)<br>entire text, all drawings | 1-7 |
| A | JP 2012-36501 A (JFE STEEL CORPORATION) 23 February 2012 (2012-02-23)<br>entire text, all drawings | 1-7 |
| A | JP 2013-124393 A (JFE STEEL CORPORATION) 24 June 2013 (2013-06-24)<br>entire text, all drawings | 1-7 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 March 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/002361**

| Patent document cited in search report | | | Publication date (day/month/year) | Patent family member(s) | | | Publication date (day/month/year) |
|---|---|---|---|---|---|---|---|
| WO | 2011/025015 | A1 | 03 March 2011 | US entire text, all drawings CN | 2012/0141829 102625740 | A1 A | |
| WO | 2014/196499 | A1 | 11 December 2014 | US entire text, all drawings CN | 2016/0082543 105263663 | A1 A | |
| WO | 2022/210749 | A1 | 06 October 2022 | CN entire text, all drawings | 117120202 | A | |
| JP | 2012-36501 | A | 23 February 2012 | (Family: none) | | | |
| JP | 2013-124393 | A | 24 June 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014171495 A
- JP 2018144098 A
- JP 2019072764 A